# EUROPEAN PATENT SPECIFICATION

(11) **EP 0 988 146 B1**
(45) Date of publication and mention of the grant of the patent: **02.05.2007**
(21) Application number: 97910049.2
(22) Date of filing: 13.10.1997
(51) Int. Cl.: B32B 27/32, B44C 1/16

(54) **MULTILAYER ELECTRONIC CUTTER FILM FOR IMAGE GRAPHICS**
ELEKTRONISCH GESTEUERT SCHNEIDBARE MEHRLAGIGE FILME FÜR BILDDARSTELLUNGEN
FILM MULTICOUCHE POUR DECOUPAGE ELECTRONIQUE UTILISE POUR REALISER UNE IMAGERIE

(30) Priority: 03.06.1997 US 867891
(43) Date of publication of application: 29.03.2000
(73) Proprietor: MINNESOTA MINING AND MANUFACTURING COMPANY, St. Paul, Minnesota 55133-3427 (US)
(72) Inventor: EMSLANDER, Jeffrey, O., Saint Paul, MN 55133-3427 (US); REGNIER, Diane, L., Saint Paul, MN 55133-3427 (US); FLEMING, Danny, L., Saint Paul, MN 55133-3427 (US)
(74) Representative: Vossius & Partner
(86) International application number: PCT/US1997/018295
(87) International publication number: WO 1998/055296

(56) References cited:
- EP-A- 0 536 852
- FR-A- 2 580 543
- GB-A- 2 301 693
- US-A- 5 112 423
- US-A- 5 330 812
- US-A- 5 585 193

## Description

This invention relates to adhesive-backed films used for electronic cutting to form image graphics.

Electronic cutter films are used to produce image graphics and lettering though the use of a computer driven knife or stylus over the surface of a film. Commercially available electronic cutting equipment include Gerber Scientific Products of Manchester, Connecticut and Zünd Systemtechnik AG, Altstatten Switzerland.

Polyvinyl chloride (PVC) is typically used as the film in these electronically cut applications because it cuts easily with the computer driven knife and because if properly formulated can provide good appearance and good durability when used in exterior applications.

Typically, a laminated web consisting of a colored vinyl-containing film/adhesive/carrier liner is cut with a computer driven knife in the desired pattern. After cutting the undesired film/adhesive is removed from the carrier liner resulting in graphic pattern bonded to the carrier liner. This graphic is then transferred to the desired substrate through the use of a prespace tape which lifts the cut vinyl-containing film from the carrier liner and holds the design in place for application.

There is a desire in some countries to eliminate the use of PVC in these applications due to the fear that it can be harmful to the environment when incinerated. There is also a desire to find a lower cost film and production method for this application while still maintaining adequate film performance in cutting, appearance and weathering (durability).

U.S. Pat. Nos. 4,713,273; 4,888,075; 4,946,532; 5,143,570; 5,372,669 and 5,585,193 disclose coextruded films for use in labels, tapes or signs.

The art needs a better polymeric material for electronic cutting uses. The PVC issues discussed above militate toward replacement polymeric material.

Polyethylene is a possible candidate for a replacement polymeric material and if properly chosen, can be cut easily with electronic cutters. Polyethylene can provide adequate weathering performance if properly formulated and stabilized against UV radiation. However, polyethylene suffers several drawbacks in that it does not offer adequate resistance to minor scratches and abrasion that would be expected in a typical image graphic application. Moreover, polyethylene does not provide adequate bonding of the adhesive to itself resulting in product failure because of adhesive debonding from the film.

Unexpectedly, the present invention provides a replacement polymeric material for electronic cutting by coextruding a top abrasion resistant layer, an easily cuttable core polymeric material, and an adhesive priming layer. Surprisingly, the addition of the abrasion resistant layer and the adhesive priming layer do not significantly affect the cuttability of the film.

Therefore, one aspect of the invention is an electronic cutting film, comprising (a) a core layer comprising polyolefin and having opposing major surfaces; (b) an abrasion resistant layer disposed on one major surface comprising an ionomeric resin; and (c) an adhesive priming layer comprising ethylene vinyl acetate disposed on an opposing major surface.

Another aspect of the present invention is a method of making that film, comprising the steps of: (a) feeding three extrudable resins into a die having three slits; (b) coextruding the three resins through the die to form the film.

Another aspect of the present invention is a method of using that film, comprising the steps of: (a) cutting the film into a desired pattern; (b) placing the film on a substrate; and (c) removing undesired film from the pattern.

A feature of the present invention is the ability to provide needed abrasion resistance on a major surface of an abrasion-susceptible polymeric film without detracting from the purpose of the film to be electronically cut to form image graphics.

Another feature of the present invention is the ability to provide a adhesive priming layer on an opposing major surface of the polymeric film also without detracting from the requirements of electronic cutting. The presence of the adhesive priming layer permits the coating of an optional, but preferred, pressure sensitive adhesive and protective release liner to that opposing major surface of the electronic cutter film of the present invention.

An advantage of the present invention is the ability to manufacture the electronic cutter film of the present invention using coextrusion techniques in mass production facilities under quality control conditions that produces a superior quality, economical replacement polymeric material for electronic cutting operations in the graphics industry.

Another advantage of the present invention is the ability of the film of the present invention to minimize "surface impressions" which can be a major problem with vinyl-based cutter film. "Surface impressions" as known in the industry refers to the surface imperfections caused when the film is wound into a roll causing the top layer of the film to come in contact with the backside of the carrier layer during storage. Pressure is applied to this interface by the addition of successive layers of the film/adhesive/liner onto itself during the winding process. The increased pressure produces a matte appearance in some areas of the film which is considered an unsightly defect in a film designed to have high gloss. This effect is accelerated with increased temperature. The exact cause of surface impressions in unknown, but speculated to be related to the presence of plasticizers in the PVC film.

Another advantage of the present invention is the ability of the film of the present invention to resist graffiti or other surface coating alterations because of the low surface energy, and low chemical reactivity features of the abrasion resistant layer.

Further features and advantages are identified in describing the following embodiments of the invention in view of the following drawing.

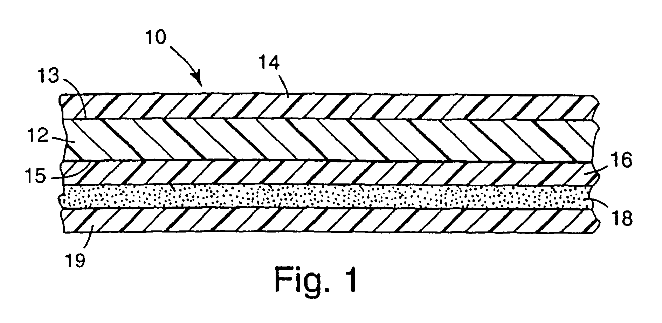

Fig. 1 is a cross-sectional view of an electronic cutter film of the present invention.

### Film Construction

Fig. 1 shows an electronic cutter film 10 comprising a core layer 12, having a major surface 13 bearing an abrasive resistant layer 14 thereon and an opposing major surface 15 bearing an adhesive priming layer 16 thereon.

Core layer 12 comprises from about 50% to about 80% of the caliper of film 10 and preferably about 65%. Abrasion resistant layer 14 comprises from about 5% to about 25% of the caliper of film 10 and preferably about 15%. Adhesive priming layer comprises from about 5% to about 30% of the caliper of film 10 and preferably about 20%.

Caliper of the film 10 can range from about 30 microns (0.00125") to about 150 microns (0.006") and preferably from about 60 microns (0.0024") to about 100 microns (0.004").

Optionally, as shown, but preferred to be contacting layer 16, the film 10 also has a coating of pressure sensitive adhesive 18 and a suitable release liner 19 to protect the adhesive 18.

With the optional adhesive and liner, the total caliper of the construction can range from about 150 microns (0.006") to about 425 microns (0.017") and preferably from about 185 microns (0.0075") to about 275 microns (0.011").

### Core Layer

Polyolefin films can work well for die cut operations if properly chosen. Nonlimiting examples of polyolefin films include polyethylenes, polypropylenes, and copolymers containing ethylene and propylene. These polyolefin resins are commercially available from a number of sources, such as Exxon Chemical Co., Houston, TX, 77253.

Preferred for the core layer 12 of film 10 in the present invention is a medium density polyethylene (MDPE) film. This film can have a secant modulus ranging from about 24'6 to about 70'3 kg/mm² (35,000 to 100,000 lbs./in²) (preferably approximately 35'15 kg/mm² (50,000 lbs./in²) as defined by ASTM D-882.

Other possible candidates for core layer 12 include polyolefin resins, provided that one chooses a film having an appropriate secant modulus. For example, high density polyethylene is a candidate provided that the secant modulus is not less than about 35'15 kg/mm² (50,000 lbs/in²).

The core layer can have a caliper ranging from about 25 microns (0.001") to about 125 microns (0.005"), and preferably from about 50 microns (0.002") to about 100 microns (0.004").

To assist in processing and coloration, a variety of additives to core layer 12 can be included. Nonlimiting examples of such additives include ultraviolet light stabilizers, thermal stabilizers, antistatic agents and colorants, which are further identified in the examples.

### Abrasion Resistant Layer

The abrasion resistant layer 14 of film 10 provides many of the features and advantages of the present invention. The layer 14 is disposed on major surface 13 of core layer 12 intended to be electronically cut.

Ionomers can work well for electronic cut operations if properly chosen.. Nonlimiting examples of abrasion resistant polymers include ethylene methyl acrylate ionomeric resins (such as Surlyn^{™} ionomers commercially available from DuPont of Wilmington, Delaware, USA),. Preferably, the resin is Surlyn^{™} 1705-1 ionomer from DuPont.

Layer 14 has both abrasion resistance and graffiti resistance, the former as determined by manual testing as described in the examples. (John, we do not have an ASTM method for testing, the main requirement of this layer is to provide increased abrasion resistance to the core layer.

With that abrasion resistance comes graffiti resistance which can be determined by manual testing.

The abrasion resistant layer can have a caliper ranging from about 5 microns (0.0002") to about 40 microns (0.0016"), and preferably from about 9 microns (.0004") to about (20 microns (0.0008").

To assist in processing and coloration, a variety of additives to layer 14 can be included. Nonlimiting examples of such additives include ultraviolet light stabilizers, thermal stabilizers, fillers, antiblock agents, slip agents, antistatic agents, antimicrobial agents, and colorants, which are further identified in the examples.

### Adhesive Priming Layer

The adhesive priming layer 16 of film 10 provides some of the features and advantages of the present invention. Without layer 16, the film 10 would have difficulty being laminated to an adhesive because of the composition of core layer 12. The layer 16 is disposed on major surface 15 of core layer 12 opposing surface 13 intended to be electronically cut.

Adhesive priming layers comprise ethylene vinyl acetate resins (such as Elvax^{™} ethylene vinyl acetate resins commercially available from DuPont. Preferably, the resin is Elvax^{™} 3135B resin from DuPont.

Layer 16 has adhesion to both core layer 12 and a pressure sensitive adhesive as determined by manual testing as described in examples.

The adhesive priming layer can have a caliper ranging from about 6 microns (.00024") to about 50 microns (0.002"), and preferably from about 12 microns (0.0005") to about 20 microns (0.0008").

To assist in processing and coloration, a variety of additives to layer 16 can be included. Nonlimiting examples of such additives include ultraviolet light stabilizers, fillers, antiblock agents, thermal stabilizers, antistatic agents, antimicrobial agents, and colorants, all of which are further identified in the

### examples.

### Optional Adhesive and Liner Layers

Films of the present invention are very suitable for electronic cutting that involves adhesion of the cut film to a substrate in order to form an image. While film 10 can be made without a coating of pressure sensitive adhesive on one major surface, it is preferred and shown in Fig. 1 that adhesive layer 18 and a protective release liner 19 are provided.

The adhesive layer 18 is present for the purpose of adhering the finished image graphic to a supporting surface such as a sign, an awning, a wall, a floor, or a ceiling of a building, a sidewall of a truck, a billboard, or any other location where an excellent quality image graphic can be used for education, entertainment, or information.

Minnesota Mining and Manufacturing Company (3M) offers a variety of media and has developed an array of pressure sensitive adhesive formulations that can be employed on the major surface opposing the surface intended for imaging. Among these adhesives are those disclosed in U.S. Pat. Nos. 5,141,790 (Calhoun et al.); 5,229,207 (Paquette et al.); 5,296,277 (Wilson et al.); 5,362,516 (Wilson et al.); and copending, coassigned PCT Patent Application Serial Nos. US97/09274 (Sher et al.) (Atty. Docket No.52771USA9A); US97/00626 (52144USA8A); and US97/00609 (52143USA1A)

The adhesive layer 18 can have a caliper ranging from about 12 microns (0.0005") to about 75 microns (0.003") and preferably ranging from about 20 microns (0.0008") to about 40 microns (0.00016").

To protect the adhesive layer 18 during storage of the film 10, a commercially available release liner should be used. Many commercially available release liners are quite acceptable for use in this invention, if an adhesive layer 18 and release liner 19 are laminated on film 10. Among these liners are those produced by Daubert Coated Products Inc. of Westchester, Illinois, USA and Rexam Release of Oakbrook, Illinois, USA. Presently preferred for optional liner 19 is a silicone release coated paper from either Rexam or Daubert.

### Method of Making Film

The multilayer film of this invention can be made by a number of methods. For example, layers 12 and optional layers 14 and 16 can be coextruded using any suitable type of coextrusion die and any suitable method of film making such as blown film extrusion or cast film extrusion. Adhesive layer 18 may be coextruded with the other layers, transferred to the film from a liner, or directly coated onto the film in an additional process step. For the best performance in coextrusion, the polymeric materials for each layer are chosen to have similar properties such as melt viscosity.

Techniques of coextrusion are found in many polymer processing references, including Progelhof, R.C., and Throne, J.L., "Polymer Engineering Principles", Hanser/Gardner Publications, Inc., Cincinnati, OH, 1993. Alternatively, one or more of the layers may be extruded as a separate sheet and laminated together to form the film. One or more of the layers may also be formed by coating an aqueous or solvent-based dispersion onto one or more previously extruded layers. This method is less desirable because of the extra process steps and the additional waste involved.

Preferably, it is desirable to improve adhesion of the adhesion priming layer 16 by corona treating. Corona treating processes are known to those skilled in the art. Preferably, corona treatment of layer 16 results in surface tensions in excess of 40 dynes/cm².

Commercially available manufacturing facilities possess coextrusion film-forming equipment with the ability to make customized dies for the extrusion process.

Films of the present invention can be electronically cut using the Gerber Scientific or Zünd equipment commercially available to those skilled in the art. Once cut, the film can be adhered to a subsrate and the weed can be removed to form that particular color in the image graphic.

Typically, each film represents one color for the image graphic, and the artisan has a supply of various films of different colors to complete the graphic by placement of cut films of those colors on a single substrate.

The films 10 of the present invention can have colorant added to the core layer 12 or the abrasion resistant layer 14, or the adhesive prime layer 16, or combinations thereof, in order to produce the various colors that are deemed necessary for multi-color image graphics. Awnings and signage typically can use electronically cut, multi-color image graphics using films of the present invention. Indeed any of the uses previously performed by vinyl-based films can be performed by films of the present invention.

As stated previously, films of the present invention minimize the appearance of surface impressions that are prevalent in vinyl-based films. Therefore, storage of films of the present invention can be much more predictable and user-friendly.

Further features and advantages of other embodiments of the invention are identified in the following examples.

### Examples

### Formulation A

Abrasion resistant layer 14 - 15% of thickness
   1000 parts DuPont Surly^{tm} 1705-1 resin (DuPont, Wilmington, DE, 19880)
   50 parts Polyfil MT 5000 talc concentrate (Polyfil Corp., Rockway, NJ, 07866
   50 parts Ampacet #10407 UV concentrate (Ampacet Corp., Tarrytown, NY, 10591)
   80 parts Standridge #12085 black color concentrate (Standridge Color Corp., Bridgewater, NJ, 08807)
Core layer 12 - 65% of thickness
   1000 parts Exxon 129.24 medium density polyethylene resin (Exxon Chemical Co., Houston, TX, 77253
   50 parts Ampacet #10407 UV concentrate
   80 parts Standridge #12085 black color concentrate
Adhesive priming layer 16 - 20% of thickness
   1000 parts DuPont Elvax^{tm} 3135B ethylene vinyl acetate resin (DuPont, Wilmington, DE, 19880)
   150 parts Polyfil MT 5000 talc concentrate
   50 parts Polyfil ABC 5000 antiblock concentrate..
   50 parts Ampacet #10407 UV concentrate
   80 parts Standridge #12085 black color concentrate

### Comparison Formulation B

Abrasion resistant layer 14 - 15% of thickness
   1000 parts DuPont Surlyn^{tm} 1705-1 resin
   50 parts Polyfil MT 5000 talc concentrate
   50 parts Ampacet #10407 UV concentrate
   80 parts Standridge #12085 black color concentrate
Core layer 12 - 65% of thickness
   1000 parts Exxon 129.24 medium density polyethylene resin
   50 parts Ampacet #10407 UV concentrate
   80 parts Standridge #12085 black color concentrate
Adhesive priming layer 16 - 20% of thickness
   1000 parts Exxon 129.24 medium density polyethylene resin
   50 parts Polyfil ABC 5000 antiblock concentrate..
   50 parts Ampacet #10407 UV concentrate
   80 parts Standridge #12085 black color concentrate

### Comparison Formulation C

Abrasion resistant layer 14 - 15% of thickness
   1000 parts DuPont Surlyn^{tm} 1705-1 resin
   50 parts Polyfil MT 5000 talc concentrate
   50 parts Ampacet #10407 UV concentrate
Core layer 12 - 65% of thickness
   1000 parts Exxon 129.24 medium density polyethylene resin
   50 parts Ampacet #10407 UV concentrate
   80 parts Standridge #12085 black color concentrate
Adhesive priming) layer 16 - 20% of thickness
   1000 parts Exxon 129.24 medium density polyethylene resin
   50 parts Polyfil ABC 5000 antiblock concentrate..
   50 parts Ampacet #10407 UV concentrate
   80 parts Standridge #12085 black color concentrate

Comparison Formulation B differs from Formulation A because it lacks an adhesive priming layer. Comparison Formulation C differs from Comparison Formulation B because it lacks colorant in the abrasion resistant layer. Comparison Formulation C differs from Formulation A because it lacks colorant in the abrasion resistant layer and it lacks an adhesive priming layer.

Each of the above formulations was coextruded using the blown film process and corona treated on the surface 15 of the core layer 12 according to the details provided in the examples below. Each film was then further laminated to an acrylate copolymer pressure sensitive adhesive coated onto a clay coated paper with a silicone release surface.

### Cutting and Weeding Testing Examples 1-3

Each Formulation A-C, respectively, was made into a multilayer film of the present invention using a conventional blown film coextrusion process. Each of three extruders, one for each layer 12, 14, and 16, respectively, supplied a melt formulation to an annular die where the melts were combined to form a single molten stream consisting of three distinct layers in a sleeve shape. For each example, the melt of the "top" extruder formed the abrasion resistant layer, the melt of the "middle" extruder formed the core layer, and the melt of the "bottom" extruder formed the adhesive priming layer. The molten polymer sleeve was then blown to its final diameter and thickness by introducing air into the sleeve and trapping it between the die and nip rolls at the top of the blown film tower. The film sleeve was then slit into two flat film webs, each of which was corona treated on the adhesive priming layer and wound onto a core. The resulting examples each had a thickness of about 0.0024" (60 microns). The film was then unwound and an acrylate copolymer pressure sensitive adhesive layer 0.001" (25.4 microns) thick and a release liner 0.004" (101 microns) thick were then laminated to the adhesive priming layer using pressure of two laminating rolls at ambient temperature.

Each of Formulations A-C was evaluated for cutting properties using a Zünd flat bed cutter Model #P-1200 using a standard 45° blade driven by Gerber Scientific (Manchester, CT, 06040) "Graphix Advantage" Release 6.0 software. The films were cut with the characters "QWERTYUIOP" using the Helvetica Medium font to a height of 1"(25 mm), 0.5"(12.5 mm), 3/8" (10 mm) and ¼" (6 mm).

A single "weed border" or box was cut around each film of text to aid weed removal. Cutting properties of the film were evaluated by examining the cut letters for lifting of letters, incomplete cuts through the film, tearing of the film, or any other defect caused by the action of the knife through the film which would cause problems in aesthetics or processing of the cut graphic. Weeding performance was evaluated by lifting the film/adhesive combination from the liner in the upper right hand corner of the "weed box" and rapidly pulling the film/adhesive diagonally to the lower left hand corner of the "weed box".

The film was then examined for remaining letters, the film was judged to cut to an acceptable height if all letters of the cut height remained. Letter height is used in the electronic film cutting industry to indicate suitability of the film for use. Typically a film having a remaining letter height of ½" or less is considered acceptable for use in electronic cutting applications.

The films were then evaluated for cutting and weeding performance. All films cut very well with no visible film defects. Weeding performance was also judged to be good with weeding acceptable at ½" (12.5mm) on all samples. Formulations B and C are described as comparisons not because of cutting properties, but because of inadequate other properties as seen below.

### Adhesive Prime Testing Example 4 and Comparison Example 5

Films using Formulation A and Comparison Formulation B were produced to a thickness of 60 microns (0.0024"), corona treated on the non-Surlyn^{tm} side and laminated to an acrylate copolymer adhesive and release liner as described above. The films were then cut into 25 mm (1") strips and applied to an aluminum panel. After 24 hours the film/adhesive strips were removed from the panel by pulling the film from the panel at a 180° angle. The film/adhesive laminate of Example 4 removed cleanly with no adhesive residue on the panel while film/adhesive laminate of Comparison Example 5 resulted in the adhesive layer debonding from the film and remaining with the aluminum panel. This is described as 100% adhesive transfer and indicates poor adhesion of the adhesive to the film. This test indicates that a prime layer, included in Formulation A, provides improved adhesive bonding and product performance compared to an unprimed film of Comparison Formulation B.

### Surface Impression Testing Comparison Example 6 and Example 7

The following test procedure was used to compare the film produced from Formulation A to commercially available calendared vinyl electronic cutter films for sensitivity to surface impressions.

Samples of a typical intermediate grade electronic cutter film (A) - 3M Tartan^{tm} 2500-94 from Minnesota Mining and Manufacturing Company (3M) of St. Paul, MN, USA was used as Comparison Example 6. Formulation A was extruded to 0.0024" (60 microns) thick and laminated with adhesive and release liner as described above was used as Example 7. Samples of Comparison Example 6 and Example 7 were cut to 10 cm x 10 cm and stacked as follows (using their numbers to indicate stacking order): 6766776667776 and placed between 2 - 10 cm x 10 cm stainless steel plates. This stack of plates and film samples was then placed into a 65° C (150° F) oven with a 6 kg weight placed on the top stainless steel plate. After 1 hour the vinyl film of Comparison Example 6 showed severe surface impressions while the film of Example 7 did not show any visible change in surface appearance. After 48 hours aging at the same temperature the vinyl films of Comparison Example 6 showed very severe surface impressions while the films of Example 7 again showed no visible change in surface appearance.

### Scratch Resistance Testing of Comparison Example 8 and Example 9

The following test was done to determine scratch resistance of a commercially available medium density polyethylene (MDPE) film (Product No. 935 from Huntsman Packaging of South Deerfield, MA, USA) and a film of Formulation A.

The purpose for this test is because: Images that are cut electronically and applied to surfaces are typically applied using a prespace tape which is removed after the image has been successfully transferred to the desired surface. The applied image then requires an additional step of rubbing the surface with a plastic applicator to ensure proper bonding. This is typically done with a plastic applicator such as a 3M PA-1, commonly called a squeegee, (3M, St. Paul, MN, USA).

A single layer film of Product No. 935 medium density polyethylene (MDPE) film having a thickness of 100 microns (0.004") was corona treated, and then laminated to an acrylate copolymer adhesive and silicone coated release liner. This step was done to provide increased rigidity to the film during the test procedure.

When this laminate of Comparison Example 8 was rubbed with a 3M PA-1 applicator, the film showed a large number of small scratches humanly visible caused by the plastic applicator. The scratches change the gloss of the film and make it unacceptable for use as a graphic film for most uses.

Example 9: a film of Formulation A was produced using the blown film process to a thickness of 90 microns (0.0035") corona treated, laminated to an acrylate copolymer adhesive and silicone coated release liner, as described above. When this film was rubbed with a 3M PA-1 plastic applicator, far fewer scratches humanly visible occurred, and the film was deemed acceptable for use in image graphic applications.

### Colorant Testing Comparison Example 10 and Example 11

Films using Comparison Formulations B and C were produced in a thickness of 60 microns (0.0024") and laminated to adhesive and liner as described above. The materials both provided an acceptable level of gloss and scratch resistance as described above, but were deemed comparison formulations because the bottom layer lacked adhesive priming characteristics. Comparison Formulation B differed from C in that Formulation B has colorant in the abrasion resistant layer while C did not. The results of this test indicate that colorant is not required in the abrasion resistant layer, making Comparison Formulation C preferably to Comparison Formulation B with respect to consistency of glossiness. Such a laminate construction would be useful if multiple film colors were produced because the clear abrasion resistant layer would be the same on all colors providing a uniform level of gloss to all colors. This is important because it is known that different pigments provide different levels of surface gloss in films due differences in their chemical and physical properties and also due to differences in the loading level required for each pigment to provide the desired level of opacity to the films. Thus, a preferred Formulation for use in the present invention would be Formulation A without colorant in the abrasion resistant layer.

The invention is not limited to the above embodiments. The claims follow.

## Claims

1. An electronic cutting film, comprising:
(a) a core layer comprising polyolefin and having opposing major surfaces;
(b) an abrasion resistant layer disposed on one major surface wherein the abrasion resistant layer comprises an abrasion resistant ionomeric resin; and
(c) an adhesive priming layer disposed on an opposing major surface, wherein the adhesive priming layer comprises ethylene vinyl acetate.

2. The film according to Claim 1, wherein the caliper of the core layer ranges from about 50% to about 80% percent of caliper of the film; wherein the caliper of the abrasion resistant layer ranges from about 5% to about 25% percent of caliper of the film; wherein the caliper of the adhesive priming layer ranges from about 5% to about 30% percent of caliper of the film; and wherein the caliper of the film ranges from about 30 microns to about 150 microns.

3. The film according to Claim 1 or 2, wherein the abrasion resistant layer also provides graffiti resistance.

4. The film according to any of Claims 1 to 3, further comprising an adhesive layer disposed on the adhesive priming layer.

5. The film according to Claim 4, further comprising a release liner disposed on the adhesive layer.

6. A method of making a film of any of Claims 1 to 5, comprising the steps of:
(a) feeding three extrudable resins into a die having three slits;
(b) co-extruding the three resins through the die to form the film of Claim 1.

7. A method of using a film of any of Claims 1 to 5, comprising the steps of:
(a) cutting the film into a desired pattern;
(b) placing the film on a substrate; and
(c) removing undesired film from the pattern.

## Patentansprüche

1. Elektronisch schneidbare Folie mit:
(a) einer Kernschicht, die Polyolefin umfasst, und die einander gegenüberliegende Hauptflächen umfasst;
(b) einer abriebbeständigen Schicht, die an einer Hauptfläche angeordnet ist, wobei die abriebbeständige Schicht ein abriebbeständiges ionomeres Harz umfasst; und
(c) einer Klebstoff-Grundschicht, die an einer gegenüberliegenden Hauptfläche angeordnet ist, wobei die Klebstoff-Grundschicht Ethylenvinylacetat umfasst.

2. Folie nach Anspruch 1, wobei die Dicke der Kernschicht von etwa 50 % bis etwa 80 % der Dicke der Folie reicht; wobei die Dicke der abriebbeständigen Schicht von etwa 5 % bis etwa 25 % der Dicke der Folie reicht; wobei die Dicke der Klebstoff-Grundschicht von etwa 5 % bis etwa 30 % der Dicke der Folie reicht; und wobei die Dicke der Folie von etwa 30 Mikron bis etwa 150 Mikron reicht.

3. Folie nach Anspruch 1 oder 2, wobei die abriebbeständige Schicht auch Graffitibeständigkeit bereitstellt.

4. Folie nach einem der Ansprüche 1 bis 3, ferner umfassend eine Klebstoffschicht, die auf der Klebstoff-Grundschicht angeordnet ist.

5. Folie nach Anspruch 4, ferner umfassend eine Trennlage, die auf der Klebstoffschicht angeordnet ist.

6. Verfahren zur Herstellung einer Folie nach einem der Ansprüche 1 bis 5, das die folgenden Schritte umfasst:
(a) Führen von drei extrudierbaren Harzen in ein Mundstück, das drei Schlitze umfasst;
(b) Coextrudieren der drei Harze durch das Mundstück, um die Folie von Anspruch 1 zu bilden.

7. Verfahren zur Verwendung einer Folie nach einem der Ansprüche 1 bis 5, das die folgenden Schritte umfasst:
(a) Schneiden der Folie in ein gewünschtes Muster;
(b) Anordnen der Folie auf einem Substrat; und
(c) Entfernen von unterwünschter Folie vom Muster.

## Revendications

1. Film pour découpage électronique, comprenant :
(a) une couche centrale comprenant une polyoléfine et comportant des surfaces principales opposées ;
(b) une couche résistante à l'abrasion disposée sur une surface principale, la couche résistante à l'abrasion comprenant une résine ionomère résistante à l'abrasion ; et
(c) une couche d'apprêt adhésive disposée sur une surface principale opposée, la couche d'apprêt adhésive comprenant un composé d'éthylène-acétate de vinyle.

2. Film selon la revendication 1, dans lequel l'épaisseur précise de la couche centrale est comprise d'environ 50 % à environ 80 % de l'épaisseur précise du film ; dans lequel l'épaisseur précise de la couche résistante à l'abrasion est comprise d'environ 5 % à environ 25 % de l'épaisseur précise du film ; dans lequel l'épaisseur précise de la couche d'apprêt adhésive est comprise d'environ 5 % à environ 30 % de l'épaisseur précise du film ; et dans lequel l'épaisseur précise du film est comprise d'environ 30 microns à environ 150 microns.

3. Film selon la revendication 1 ou 2, dans lequel la couche résistante à l'abrasion apporte aussi une résistance aux graffitis.

4. Film selon l'une quelconque des revendications 1 à 3, comprenant en outre une couche adhésive disposée sur la couche d'apprêt adhésive.

5. Film selon la revendication 4, comprenant en outre une doublure anti-adhésive disposée sur la couche adhésive.

6. Méthode de fabrication d'un film selon l'une quelconque des revendications 1 à 5, comprenant les étapes qui consistent à :
(a) introduire trois résines extrudables dans une filière comportant trois fentes ;
(b) co-extruder les trois résines à travers la filière pour former le film selon la revendication 1.

7. Méthode d'utilisation d'un film selon l'une quelconque des revendications 1 à 5, comprenant les étapes qui consistent à :
(a) découper le film pour former un motif désiré ;
(b) placer le film sur un substrat ; et
(c) retirer le film superflu du motif.
